# EUROPÄISCHE PATENTSCHRIFT

(11) **EP 3 589 714 B1**
(45) Veröffentlichungstag und Bekanntmachung des Hinweises auf die Patenterteilung: **15.07.2026**
(21) Anmeldenummer: 18707054.5
(22) Anmeldetag: 02.03.2018
(51) Int. Cl.: C09J 183/04

(54) **WASSERBASIERTER KLEBSTOFF AUS DISPERGIERTEM POLYMER UND EMULGIERTEM SILIKONHARZPOLYMER**
WATER-BASED ADHESIVE MADE FROM DISPERSED POLYMER AND EMULSIFIED SILICONE RESIN POLYMER
ADHÉSIF À BASE D'EAU CONSTITUÉ DE POLYMÈRE DISPERSÉ ET DE POLYMÈRE DE RÉSINE DE SILICONE ÉMULSIONNÉE

(30) Priorität: 02.03.2017 EP 17158993
(43) Veröffentlichungstag der Anmeldung: 08.01.2020
(73) Patentinhaber: nolax AG, 6203 Sempach Station (CH)
(72) Erfinder: LÄPPLE, Markus, 6206 Neuenkirch (CH); HOSOTTE, Claude, 68220 Michelbach le Haut (FR); NIEDERBERGER, Barbara, 6314 Unterägeri (CH)
(74) Vertreter: Hepp Wenger Ryffel AG
(86) Internationale Anmeldenummer: PCT/EP2018/055136
(87) Internationale Veröffentlichungsnummer: WO 2018/158407

(56) Entgegenhaltungen:
- JP-B2- 3 811 220
- US-A1- 2016 009 113

## Beschreibung

Die Erfindung betrifft einen wasserbasierten Klebstoff, ein Verfahren zum Verkleben mit einem solchen Klebstoff, ein mit diesem Klebstoff verklebtes Isolationsmaterial sowie die Verwendung eines Silikonharzpolymers für einen solchen Klebstoff gemäss den Oberbegriffen der unabhängigen Ansprüche.

Für die Laminierung von Hochtemperatur beständigen Isolationsmaterialien (z.B. Glasfasermatte/Aluminiumfolie) im Motorraum oder Auspuffanlagen mit Langzeitbeständigkeit über 350°C gibt es nur eine eingeschränkte Klebstoffauswahl auf dem Markt. Verwendet werden meist Silikon-Klebstoff, die entweder 100%-System sind oder auf Lösungsmittel basieren. Diese Silikonklebstoffe sind meist Zweikomponenten-Systeme, welche zunächst vernetzt werden und nach der Applikation im Vernetzungskanal kondensieren. Solche Systeme sind aber nur für Gebrauchstemperaturen um 180°C bis 210°C einsetzbar.

Moderne Motoren haben heute das Problem, dass sie aufgrund der CO₂ und NOₓ Problematik gleichmässig und schnell erwärmt werden müssen. Bei quer verbauten Motoren sitzt meist der Turbolader stirnwandseitig. Dort staut sich die Hitze, insbesondere nach Abstellen des Motors. Diese heiss/kalt Momente stressen die Anbauteile am meisten. Es kann zu Schlauchplatzern mit der Folge eines Motorschadens oder eines Motor-/Fahrzeugbrands kommen.

Ein Einkomponenten-System wird in US 2009/0111931 A1 beschrieben und besteht aus einer Silikon-Elastomer-Zusammensetzung, welche bei hohen Temperaturen vulkanisiert wird. Der Klebstoff umfasst unter anderem Polyorganosiloxane und ist bei mässigen Temperaturen langzeitstabil. Eine solche Zusammensetzung hat jedoch den Nachteil, dass sie eine hohe Viskosität aufweist und daher das zu verklebendes Gewebe nicht stark genug penetrieren kann. In der Regel ist eine entsprechende Vorbehandlung des Gewebes nötigt. Dies kann zu höheren Materialkosten führen.

JP 3 811 220 B2 beschreibt zwar einen feuchtigkeitsbeständigen Klebstoff, der wasserbasiert ist und ein dispergierten Polymer und ein emulgiertes Silikonharzpolymer umfasst; solche als Latex bekannte Zusammensetzungen zeigen jedoch keine Hitzebeständigkeit.

Es ist daher Aufgabe der Erfindung die Nachteile des Standes der Technik zu überwinden. Insbesondere soll ein wasserbasierter Klebstoff zur Verfügung gestellt werden, der bei hohen Temperaturen eine gute Haftfestigkeit aufweist, nicht brennbar ist und sich für die Herstellung von Isolationsmaterialien eignet, welche widerstandfähig gegenüber hohen Temperaturen sein müssen. Die Erfindung betrifft einen wasserbasierten Klebstoff, der ein dispergiertes Polymer und ein emulgiertes Silikonharzpolymer umfasst, dadurch gekennzeichnet, dass der Klebstoff über reaktive Gruppen bei 100 bis 300 ºC nachvernetzbar ist.

Das Polymer ist in einer wässrigen Phase dispergiert. Die Silikonharzemulsion ist vorzugsweise eine wässrige Methyl/Phenyl-Silikonharzemulsion (Me/Ph-Si Harz), wie beispielsweise Silres^{®} MPF 52 E der Firma Wacker Chemie AG. Unter "wasserbasiert" ist zu verstehen, dass es sich bei der kontinuierlichen Phase um Wasser handelt.

Heisssiegelfähige Klebstoffe aus 100% thermoplastischen Polymer, wie beispielsweise Ethylen-Acrylsäure-Copolymer (EAA) zeigen eine gute Haftfestigkeit bei Raumtemperatur und eignen sich zum Verkleben von unterschiedlichen Substraten. Mit einem solchen Klebstoff hergestellte Verbunde sind jedoch nicht genügend hitzebeständig, die Substrate lösen sich unter starker Wärmeeinwirkung voneinander.

Silikonharze auf wässriger Basis, wie sie beispielsweise in Lacken vorkommen, zeigen keine Klebeigenschaften, dafür jedoch eine gute Hitzebeständigkeit.

Es wurde nun überraschend festgestellt, dass mit einer Kombination aus einem dispergierten Polymer und einer wässrigen Silikonharzpolymer-Emulsion auf wässriger Basis ein Klebstoff resultiert, der eine gute Haftfestigkeit bei hohen Temperaturen aufweist, nicht brennbar ist, lagerstabil und gegen viele Lösungsmittel, Öle und Säuren beständig ist. Insbesondere weisen dispergierte Polymere, die Co-Polymere mit Acrylat oder Acrylsäure umfassen, eine gute Medienbeständigkeit gegenüber Benzin, Diesel, Motorenöl, Bremsflüssigkeit, Bremsreiniger und Streusalz-Lösungen auf.

Der wasserbasierte Klebstoff kann Lösungsmittel enthalten. Der Lösungsmittelgehalt sollte jedoch 6 Gew.-% nicht übersteigen. Ein niedriger Lösungsmittelgehalt trägt zum einen zur Schonung der Umwelt bei und erhöht den Arbeitsschutz.

Der Klebstoff eignet sich zum Verkleben von unterschiedlichen Substraten wie beispielsweise Metall bzw. Metallfolien, insbesondere Aluminium, und Glasfaser. Auch andere Substrate sind denkbar: Silikatfaser; Polyamidfaser, z.B. Kevlar oder Aramid; Polyacrylnitrilfaser und/oder Carbonfaser. Diese Materialien können in jeder Kombination miteinander verklebt werden.

Verbunde, die mit einem erfindungsgemässen Klebstoff erzeugt wurden, behalten auch nach der Trocknung ihre ursprünglichen Eigenschaften, wie beispielsweise Flexibilität. Eine Versteifung des Materials aufgrund des Klebstoffes erfolgt nicht.

Der Klebstoff kann als Einkomponenten-System vorliegen. Die Bestandteile können vorgemischt sein. Die Klebefunktion kann durch Aktivierung, beispielsweise Erwärmen, erhalten werden.

Ein solcher Klebstoff erleichtert die Handhabe und vereinfacht das Verfahren zum Auftragen des Klebstoffes. Zudem können im Vergleich zu Zweikomponenten-Systemen Materialkosten eingespart werden. Eine Verklebung von Glasvlies und Aluminiumfolie mittels eines Zweikomponenten-Silikonklebstoffes benötigt beispielsweise einen Vorstrich des Glasvlies, da das Zweikomponentensystem sonst nicht genügend in das Material eindringen kann.

Ein erfindungsgemässes Einkomponenten-System kann niederviskos sein, benetzt das Glasvlies gut und benötigt keinen Vorstrich. Entsprechend kann Material eingespart werden.

Das dispergierte Polymer ist vorzugsweise ein thermoplastisches Polymer.

Das dispergierte Polymer kann als Bindemittel fungieren.

Das thermoplastische Polymer hat den Vorteil, dass es die Klebeeigenschaften positiv beeinflusst.

Das thermoplastische Polymer kann polare Gruppen aufweisen. Die polaren Gruppen können beispielsweise Hydroxyl- und/oder Carboxylgruppen sein.

Die polaren Gruppen gewährleisten die Adhäsion der unterschiedlich zu verklebenden Substrate wie beispielsweise Aluminium oder Glas.

Vorzugsweise ist das thermoplastische Polymer ein Co-Polymer oder eine Kombination von Co-Polymeren, ausgewählt aus der Gruppe: Acrylat-Copolymer, Styrol-Acrylat-Copolymer, Ethylen-Vinylacetat-Copolymer, Acrylat-Urethan-Copolymer, Polyurethan-Copolymer, Ethylen-Acrylsäure-Copolymer.

Durch die Wahl des thermoplastischen Kunststoffes lassen sich die gewünschten Eigenschaften steuern.

Vorzugsweise ist das Silikonharzpolymer ein Polysiloxan mit organischen Seitengruppen. Die Seitengruppen sind vorzugsweise ausgewählt aus der Gruppe: Methyl-, Phenyl-, Hydroxy- und/oder Alkoxy-.

Das Silikonharz kann aus hochvernetzten Polysiloxanen bestehen. Die Seitengruppen können Methyl- und/oder Phenyl-Gruppen sein. Die Verwendung von Phenyl als Seitengruppe hat den Vorteil, dass eine besonders hohe Hitzebeständigkeit des Klebstoffes erzielbar ist. Zudem haben Phenylgruppen eine höhere Kompatibilität mit anderen Harzen und mit Füllstoffen. Die Thermoplastizität gegenüber reinen Methylsilikonharzen wird verbessert. Weitere Seitengruppen auf der Siloxan-Hauptkette können beispielsweise Hydroxy- oder Alkoxygruppen sein, welche zu einer besseren Aushärtung bei erhöhter Temperatur führen. Während der Aushärtung kann eine Kondensationsreaktion sowohl von Polymersegmenten zueinander als auch zu Füllstoffen, anderen Harzen oder Substraten erfolgen.

Insbesondere reagieren die Hydroxy- und Alkoxygruppen zusammen nach einer Kondensationsreaktion, was zu einer Nachvernetzung des Silikonharzes und somit zum Aushärten führt. Die Kondensationsreaktion kann durch Zugabe eines Zinn-basierten Katalysators, zum Beispiel Dibutyltin dilaurate, beschleunigt werden. Die Nachvernetzung erfolgt in einem Temperaturbereich zwischen 100 und 300 °C, besonders bevorzugt zwischen 120 und 250°C und ganz besonders bevorzugt zwischen 150 und 230°C. Die Vernetzung kann auch mit in der Formulierung vorhandenen organischen Polymeren erfolgen, so dass eine Kondensationsreaktion zwischen Hydroxy- oder Alkoxygruppen des Harzes mit Hydroxy- oder Alkoxygruppen des Polymers stattfindet. Es ist auch möglich, dass die Vernetzung zwischen im Silikonharz vorliegenden Vinylgruppen und Si-H-Gruppen stattfindet. In diesem Fall kann der Formulierung zusätzlich ein Platinkatalysator beigemischt sein.

Im oben genannten Temperaturbereich zwischen 100 und 300°C, besonders bevorzugt zwischen 120 und 250°C und ganz besonders bevorzugt zwischen 150 und 230°C, kann es ausserdem zu einer Vernetzung von funktionellen Gruppen des dispergierten Polymers miteinander kommen. Dies ist insbesondere dann der Fall, wenn die dispergierten Polymere freie Hydroxy-Gruppen und/oder freie Alkoxy-Gruppen aufweisen und diese Gruppen Kondensationsreaktionen eingehen. Es sind aber auch andere Reaktionen über andere funktionelle Gruppen des dispergierten Polymers denkbar.

Vernetzungsreaktionen von freien funktionellen Gruppen am Silikonharzpolymer sind ebenso möglich. Weiter sind Vernetzungsreaktionen zwischen freien funktionellen Gruppen am Silikonharzpolymer einerseits und am dispergierten Polymer andererseits möglich.

Durch eine derartige Nachvernetzung, insbesondere Nachvernetzung des Silikonharzes, wird eine besonders hohe Hitzebeständigkeit des Klebstoffes sowie mit diesem Klebstoff verklebten Materials erzielt.

Der Klebstoff kann weitere Bestandteile umfassen. Beispielsweise können der Zusammensetzung weitere Pigmente und/oder Füllstoffe für die Hochtemperaturleistung, für die Viskositätseinstellung und verbesserte Beschichtung zugesetzt sein.

Der Klebstoff kann auch Verdickungsmittel, vorzugsweise anorganische und besonders bevorzugt hochdisperse Kieselsäure, enthalten ohne das es im Vergleich zu organischen Verdickungsmittel zu einer Verschlechterung der Hitzebeständigkeit kommt.

Weitere Additive können Neutralisationsmittel, Dispergierungsmittel, Rheologiehilfsmittel, Entschäumungsmittel, wie Biozid, umfassen.

Der Klebstoff kann einen Katalysator enthalten. Ein Katalysator kann die Vernetzung der einzelnen Komponenten beschleunigen Mit einer schnelleren Vernetzung ist ein schnellerer Kohäsionsaufbau, d.h. eine innere Festigkeit, verbunden. Dadurch kann die Weiterverarbeitung eines Verbundes aus verklebten Substraten früher erfolgen.

Der Feststoffgehalt des Klebstoffes beträgt vorzugsweise über 50 % Gewichtsprozent und besonders bevorzugt zwischen 60 % und 80 %.

Ein hoher Feststoffgehalt hat bei wässrigen Systemen den Vorteil, dass eine schnellere Trocknung möglich ist bzw. es wird weniger Energie zum Trocknen benötigt. Der Feststoffgehalt kann durch das thermoplastische Polymer, Silikonharzpolymer, Füllstoffe und/oder unlösliche Zusatzstoffe resultieren. Der Feststoffgehalt sollte jedoch nicht über 80 % liegen. Zu hohe Füllstoffanteile und/oder unlöslicher Zusatzstoffe wirken sich negativ auf die Bruchdehnung des Klebstofffilms aus.

Der Klebstoff weist vorzugsweise einen pH-Wert zwischen 6 und 9 auf.

Der pH-Wert dient der Formulierung und Kompatibilität der Komponenten. Des Weiteren sollte der pH-Wert des Klebstoffes derart gewählt werden, dass dieser die zu klebenden Materialien nicht angreift. Beispielsweise könnte ein zu hoher pH-Wert eine zu verklebende Aluminiumfolie angreifen.

Der Klebstoff kann eine Viskosität von 1'000 bis 50'000 mPa˙s aufweisen, bevorzugt eine Viskosität von 5'000 bis 30'000 mPa˙s und ganz besonders bevorzugt eine Viskosität von 5'000 bis 15'000 mPa˙s.

Die Werte für die Viskosität wurden nach der Brookfield-Methode mit einem Brookfield DVI+ bestimmt. Die Messungen für die Viskositäten von 1'000 bis 50'000 mPa˙s wurden bei 23°C mit einer Spindel 4 bei 20 rpm vorgenommen.

Ein weiterer Aspekt der Erfindung betrifft ein Verfahren zum Verkleben von mindestens zwei unterschiedlichen Substraten mit einem Klebstoff wie vorhergehend beschrieben. Das Verfahren umfasst die Schritte:
- Bereitstellen von mindestens zwei Substraten,
- Auftragen des Klebstoffes auf zumindest einen Teil des ersten Substrats und/oder des zweiten Substrats,
- Fügen und Verkleben der beiden Substrate.

Der Klebstoff kann sowohl punktiert als auch flächig aufgetragen werden. Das Auftragsgewicht liegt vorzugsweise bei mindestens 70 g/m². Im Anschluss kann eine Trocknung des Klebstoffes bei einer definierten Temperatur zwischen Raumtemperatur und 150°C, bevorzugt 30°C bis 100°C und besonders bevorzugt 50°C bis 80°C erfolgen. Nach der Trocknung kann eine Aktivierung des Klebstoffes erfolgen. Unter Aktivierung ist dabei zu verstehen, dass die Klebeeigenschaften beispielsweise durch Vernetzung der Komponenten erzielt werden. Die Aktivierung kann bei einer Temperatur zwischen 160°C bis 300°C, bevorzugt 180°C bis 260°C und besonders bevorzugt bei 210°C bis 240°C mit einer Aktivierungsdauer von 1 bis 60 min, bevorzugt 10 min bis 30 min und besonders bevorzugt 20 min, erfolgen. Die Temperatur und Zeit für die Aktivierung ist abhängig von der Zusammensetzung und der verwendeten Schichtdicke des Klebstoffes.

Eine Lagerung nach dem Verkleben respektive der Trocknung ist ebenfalls denkbar. Die Klebstoffzusammensetzung ist latent reaktiv. Der verklebte Verbund aus mindestens zwei Substraten zeigt erst nach der nachgelagerten Aktivierung seine endgültigen Eigenschaften. Der nichtaktivierte Verbund ist in diesem Fall bei Raumtemperatur für eine definierte Zeit lagerfähig.

Das Verfahren hat den Vorteil, dass unterschiedliche Substrate einfach und kostengünstig dauerhaft zusammengefügt werden können. Die Verfahrensschritte können vereinfacht werden.

Das Auftragen des Klebstoffes kann mittels Walze, Schablone, Rakel oder Sprühen erfolgen.

Die unterschiedliche Auftragsweise hat den Vorteil, dass der Klebstoff auf verschiedene Substrate und entsprechend dem Verwendungszweck aufgetragen werden kann.

Ein Substrat kann ein Metall sein, vorzugsweise Aluminium. Das zweite Substrat ist vorzugsweise ausgewählt aus der Gruppe:
Glasfaser, Silikatfaser, Polyamidfaser, Polyacrylonitrilfaser und/oder Carbonfaser.

Das Verkleben unterschiedlicher Substrate ermöglicht einen Zugang zu einer Vielzahl von Materialien.

Ein weiterer Aspekt der Erfindung betrifft die Verwendung eines Silikonharzpolymers in einem wasserbasierten Klebstoff. Der Klebstoff umfasst wenigstens ein in Wasser dispergiertes Polymer und ist über reaktiven Gruppen bei 100 bis 300 ºC nachvernetzbar, insbesondere über eine Kondensationsreaktion.

Die Verwendung von Silikonharzpolymer in einem Klebstoff hat den Vorteil, dass der Klebstoff hohen Temperaturen stand hält und ein breites Anwendungsfeld für einen solchen Klebstoff zur Verfügung steht.

Ein weiterer Aspekt der Erfindung betrifft ein Isolationsmaterial, das mit einem Klebstoff, wie vorhergehend beschrieben, verklebt ist.

Das Isolationsmaterial kann mindestens zwei verklebte Substrate aufweisen. Ein erstes Substrat ist dabei vorzugsweise ein Metall, insbesondere Aluminium, und ein zweites Substrat kann ausgewählt sein aus der Gruppe: Glasfaser, Silikatfaser, Polyamidfaser, Polyacrylonitrilfaser und/oder Carbonfaser.

Das Isolationsmaterial kann beispielsweise aus einer Aluminiumfolie und einer Glasfasermatte aufgebaut sein. Für die Herstellung des Isolationsmaterials wird die Aluminiumfolie mit dem wasserbasierten Klebstoff beschichtet. Anschliessend kann die Glasfasermatte aufgelegt werden. Aufgrund der niedrigeren Viskosität des Klebstoffes im Vergleich zu herkömmlichen 100-prozentigen Silikonharz kann der Klebstoff das Glasgewebe sehr gut penetrieren.

Das Isolationsmaterial weist eine hohe Hitzebeständigkeit und Flexibilität auf. Zudem zeichnen sich die Isolationsmaterialien dadurch aus, dass sie nicht brennbar sind.

Isolationsmaterialien unter Verwendung des vorhergehend beschrieben Klebstoffes eignen sich besonders gut für Bauteile in der Autoindustrie, insbesondere für den Motoren- und Auspuffbereich.

Bauteile mit solchen Isolationsmaterialien können wesentlich zur Fahrsicherheit beitragen. Zum einen sind die Bauteile aufgrund der Materialbeschaffenheit langlebiger als bisher verwendete Bauteile und zum anderen können aufgrund der vorteilhaften Eigenschaften der Materialien Motorenschäden oder Ausbreitung von Bränden deutlich eingeschränkt werden.

### BEISPIELE

Es wurden verschiedene Rohstoffzusammensetzungen für die Herstellung des Klebstoffs getestet.

In Tabelle 1 sind die Ausgangsrohstoffe mit der chemischen Charakterisierung aufgelistet.

**Tabelle 1:**

| **Bezeichnung** | **Chemische Charakterisierung** | **Handelsname (Hersteller)** |
|---|---|---|
| EAA (A)* | Heisssiegelfähiger Klebstoff auf Basis wässriger Ethylen-Acrylsäure-Copolymer Dispersion (EAA) | nolax S35.3110 (nolax AG) |
| Si-Harz (LSM haltig) (B) | Wässrige Me/Ph-Si Harz Emulsion (LSM haltig, <8% Xylol), 50% Feststoffgehalt | Silres P 50 E (Wacker Silicone) |
| Si-Harz (wässrig) (C) | Wässrige Me/Ph-Si Harz Emulsion, 50% Feststoffgehalt | Silres MPF 52 E (Wacker Silicone) |
| StyAc** (D) | Wässrige Styrol-Acrylat Dispersion (StyAc) | Pliotec HDT 12 (OMNOVA Solutions) |
| PUD*** (E) | Wässrige Polyurethane Dispersion (PUD) | Neorez R-600 (DSM Coating Resins) |
| Füllstoff (F) | kalziniertes Kaolin | Kamin 70 (KaMin, LLC) |
| Entschäumer (G) | Kombination von flüssigen KW, Silikonen, oxalkylierten Verbindungen, modifizierten Feststoffen und nichtionogenen Emulgatoren. | Agitan 701 (Münzing) |

| | | |
|---|---|---|
| *Ethylen-Acrylsäure ***Polyurethan-Dispersion **Styrol-Acrylat KW Kohlenwasserstoffe | | |

Tabelle 2 zeigt eine Versuchsmatrix der verschiedenen Zusammensetzungen der Ausgangstoffe mit Angabe in Gewichtsprozent.

**Tabelle 2 (Angaben in Gew.-%)**

| **Formulierung** | **1** | **2** | **3** | **4** | **5** | **6** | **7*** | **8** | **9** | **10*** | **11** | **12** | **13*** | **14*** |
|---|---|---|---|---|---|---|---|---|---|---|---|---|---|---|
| A | 100 | 90.7 | | | | | 34.8 | | | | | | | 34.8 |
| B | | | 100 | 83.0 | | | | | | | | | | 52.2 |
| C | | | | | 100 | 82.6 | 52.2 | | | 52.2 | | | 65.2 | |
| D | | | | | | | | 100 | 86.9 | 34.8 | | | | |
| E | | | | | | | | | | | 100 | 90.9 | 21.7 | |
| F | | 9.4 | | 16.6 | | 16.5 | 13.0 | | 13.1 | 13.0 | | 7.6 | 13.0 | 13.0 |
| G | | | | 0.02 | | 0.02 | 0.02 | | 0.02 | 0.02 | | 0.02 | 0.02 | 0.02 |
| Verdicker | | | | | | 0.4 | | | | | | 1.5 | | |
| Dispergiermittel | | | | 0.4 | | | 0.5 | | | | | | | |

| | | | | | | | | | | | | | | |
|---|---|---|---|---|---|---|---|---|---|---|---|---|---|---|
| * erfindungsgemäss | | | | | | | | | | | | | | |

### SUBSTRATE

Für die Herstellung des Prüfkörpers wurden folgende Substrate verwendet:
- isoGLAS Filamentgewebe (Frenzelit) mit einem Gewicht von 420 g/m²;
- Aluminiumfolie mit einer Dicke von 30 µm für T-Peel und einer Dicke von 20 µm für Medienbeständigkeit.

Zum Vergleich dienten Muster eines Verbundes aus Glasfasergewebe Isoglas mit Alufolie 20 µm und 100% Silikonklebstoff. Dieser Verbund wird in den nachfolgenden Ergebnistabellen als Benchmark (BM) bezeichnet.

### HERSTELLUNG DES PRÜFKÖRPERS

Es wurden 2 Stücke in der Grösse von ca. 10cm x 12 cm zugeschnitten. Die Alufolie wurde in 2 Stücke von ca. 13cm x 20cm zugeschnitten.

### Verklebung:

Die zu prüfende Rezeptur wurde mit einem Spiralrakel, in der Regel RDS 44, ohne Druck auf die matte Seite der Alufolie aufgezogen. Auftragsgewicht lag um 70 g/m². Direkt in den noch feuchten Film wurde nun ein Stück Glasfasergewebe der Länge nach (mit der Rückseite nach unten) aufgelegt; es ist darauf zu achten, dass ca. 2 cm des oberen Randes nicht im Klebstoff sind - dies erleichtert später das Einspannen in die Zugprüfmaschine. Das Glasgewebe wurde von Hand gleichmässig angedrückt. Anschliessend wurde der Prüfkörper im Ofen während ca. 20 Min bei 50°C getrocknet.

### Aktivierung bei 230°C:

Direkt nach der Trocknung wurden die Prüfkörper im Muffelofen 1 bis 20 Min bei 230°C aktiviert. Die Prüfkörper wurden immer mit der Aluminium-Seite nach unten in den Ofen gelegt. Nach Möglichkeit sollte die Klebestreifenmarkierung vor dem Aktivieren entfernt werden. Die Aktivierung ist notwendig um Vernetzung des Klebstoffsystems herbeizuführen.

### HAFTUNG VOR UND NACH HITZEBELASTUNG BEI 90°C (T-PEEL)

Der T-Peel Test wurde in einer Heizkammer bei 90°C durchgeführt. Die Probenhalterung für die Heizkammer hatte einen Abstand von 3 cm zwischen der unteren und der oberen Klemme. Die Messlänge des Probenkörpers betrug 70 mm, die relative Geschwindigkeit der Klemmen betrug 50 mm/min, die maximale Kraft 100 N. Die Prüfkörper wurden vor dem Einspannen 15 min bei 90°C temperiert und anschliessend 2 min bei 90°C nach dem Einspannen. Im Anschluss wurden die Prüfkörper einer Hitzebelastung von 400°C über einen Zeitraum von 1 h ausgesetzt.

In Tabelle 3 sind die Prüfergebnisse der einzelnen Formulierungen aus Tabelle 2 zusammengefasst.

**Tabelle 3**

| **Formulierung** | **Haftwerte vor Hitzebelastung,** | | **Haftwerte nach Hitzebelastung, 1h bei 400°C** | |
|---|---|---|---|---|
| | Durchschnitt Last (N/2cm) | Maximum Last (N/2cm) | Durchschnitt Last (N/2cm) | Maximum Last (N/2cm) |
| 1 | 0.75 | 1.29 | 0.52 | 1.15 |
| 2 | 0.68 | 1.25 | 0.82 | 1.55 |
| 3 | <0.1 | <0.1 | <0.1 | <0.1 |
| 4 | <0.1 | <0.1 | <0.1 | <0.1 |
| 5 | <0.1 | <0.1 | <0.1 | <0.1 |
| 6 | <0.1 | <0.1 | <0.1 | <0.1 |
| 7* | 4.37 | 5.84 | 1.58 | 2.12 |
| 8 | 8.39 | 10.21 | <0.1 | <0.1 |
| 9 | 8.04 | 9.57 | <0.1 | <0.1 |
| 10* | 3.19 | 4.13 | 0.52 | 1.03 |
| 11 | 6.35 | 9.00 | <0.1 | <0.1 |
| 12 | 6.58 | 9.11 | <0.1 | <0.1 |
| 13* | 2.6 | 3.75 | 0.85 | 1.32 |
| 14* | 2.07 | 3.26 | 1.33 | 2.07 |
| BM | Verbund nicht | trennbar | <0.1 | <0.1 |

| | | | | |
|---|---|---|---|---|
| * erfindungsgemäss | | | | |

Die reine wässrige Silikonharz Emulsionen (Formulierung 3 und 5) weisen schlechte Filmbildung und Klebeigenschaften auf.

Der EAA-Klebstoff (Formulierung 1 und 2) hält die beiden Materialien des Prüfkörpers zusammen, verliert aber in der Haftung nach Lagerung bei erhöhter Temperatur.

Der erfindungsgemässe Klebstoff (Formulierung 7), basierend auf Formulierung 1 und eine wässrige Silikonharz Emulsion, zeigt nach Hitzebelastung (1h 400°C) höhere Haftwerte für den Prüfkörper als die einzelnen Substanzen (Formulierung 1, 3, 5).

Auch mit dem erfindungsgemässen Klebstoff aus einem Styrol-Acrylat-Copolymer und einer Silikonharz-Emulsion (Formulierung 10) hält der Verbund nach Hitzebelastung noch zusammen, während die einzelnen Substanzen (Formulierungen 6, 8, 9) nicht halten.

Eine wässrige erfindungsgemässe Polyurethan-Dispersion mit Silikonharz gemäss Formulierung 13 zeigt ebenfalls verbesserte Haftwerte gegenüber den einzelnen Bestandteilen (Formulierungen 11 und 12) und insbesondere gegenüber der Benchmark.

Die Formulierungen 8 und 9 sowie 11 und 12 zeigen zwar gute Haftwerte vor der Hitzebelastung, halten jedoch der Hitzebelastung nicht stand.

### HITZEBESTÄNDIGKEIT INFRAROTSTRAHLER

Zur Prüfung der Hitzebeständigkeit wurde der Prüfkörper auf eine Grösse von 25 x 25 cm zugeschnitten. Der Prüfkörper wurde in der Mitte auf einer Grösse von ca. 2.5 x 2.5 cm mit einem hitzebeständigem Lack (Auspufflack) besprüht. Der Prüfkörper wurde auf ein Rost gelegt. In einem Abstand von 20 mm zum Rost und des mit hitzebeständigem Lack versehenen Stück des Prüfkörpers wurde eine Infrarotquelle angeordnet. Als Infrarotstrahler wurde ein Krelus-IR-Strahler verwendet. Der Prüfkörper wurde mit einer Temperatur von 459°C während 2 h bestrahlt.

Tabelle 4 fasst die Ergebnisse der Prüfung der Hitzebeständigkeit mittels Infrarotstrahler zusammen.

**Tabelle 4**

| **Formulierung** | **Beurteilung** |
|---|---|
| 1 | bereits nach 5 min delaminiert |
| 2 | keine Selbstdelamination nach 2h bei 459°C |
| 7* | keine Selbstdelamination nach 2h bei 459°C |
| 10* | keine Selbstdelamination nach 2h bei 459°C |
| 13* | keine Selbstdelamination nach 2h bei 459°C |
| 14* | keine Selbstdelamination nach 2h bei 459°C |
| BM | nach 10 min delaminiert |

| | |
|---|---|
| * erfindungsgemäss | |

Da die Prüfkörper mit einer wässrigen Silikonharz Emulsionen (Formulierung 3 und 6) gemäss Tabelle 3 bereits bei Hitze keine Haftfestigkeit zeigten, konnte die Hitzebeständigkeit des entsprechenden Prüfkörpers nicht geprüft werden. Auch die Prüfkörper mit den Formulierungen 8 und 9 sowie die Polyurethan-Dispersionen enthaltenen Formkörper (Formulierungen 11 und 12, Tabelle 3) sind nicht hitzebeständig.

Der Prüfkörper mit einem EAA-Klebstoff (Formulierung 1) delaminiert bereits nach 5 min und weist daher nur eine sehr geringe oder keine Hitzebeständigkeit auf.

Die Prüfkörper mit dem erfindungsgemässen Klebstoff (Formulierungen 7, 10 und 13) zeigten auch nach 2 h bei 459°C keine Selbstdelaminierung. Unter Delaminierung bzw. Selbstdelaminierung ist dabei zu verstehen, dass sich die einzelnen Substrate des Prüfkörpers voneinander lösen.

Ein Prüfkörper mit dem erfindungsgemässen Klebstoff 14 umfasst zusätzlich Lösungsmittel. Ein solcher Prüfkörper zeigt ebenfalls keine Selbstdelaminierung. Im getrockneten und aktivierten Zustand ist die Formulierung 14 im Wesentlichen frei von Lösungsmittel. Das Vorhandensein von Spuren des Lösungsmittels im ppm-Bereich kann jedoch nicht ausgeschlossen werden.

### HITZEBESTÄNDIGKEIT THERMOOFEN

Der jeweilige Prüfkörper wurde für 1 h bei 400°C in einem Hochtemperaturofen stehend auf einem Gestell frei gelagert.

Tabelle 5 zeigt die Ergebnisse aus der Hitzebelastung im Thermoofen.

**Tabelle 5**

| **Formulierung** | **Beurteilung** |
|---|---|
| 1 | keine Delamination |
| 2 | keine Delamination |
| 7* | keine Delamination |
| 8 | nach 5 Min delaminiert |
| 9 | nach 5 Min delaminiert |
| 10* | keine Delamination |
| 11 | nach 5 Min delaminiert |
| 12 | nach 5 Min delaminiert |
| 13* | keine Delamination |
| 14* | keine Delamination |
| BM | nach 10 min delaminiert |

| | |
|---|---|
| * erfindungsgemäss | |

Die Prüfkörper mit den erfindungsgemässen Klebstoffen (Formulierungen 7, 10, 13, 14) zeigen auch im Thermoofen keine Delaminierung.

### BRENNTEST

Der Brenntest wurde mit einem Brennofen des Typs BBW der Firma Wazau, Berlin durchgeführt.

Der Prüfkörper wurde auf eine Grösse von 560 mm x 160 mm zugeschnitten und auf einem Träger fixiert. Der Bunsenbrenner wurde entzündet und vor Testbeginn mindestens 2 min brennen gelassen. Anschliessend wurde der Brenner in einem Winkel von 30° mit einem Abstand von 2 cm zum Prüfkörper gehalten. Der Prüfköper wurde 5 Sekunden horizontal (Entzündungstest) und 15 Sekunden horizontal (Brennbarkeitstest) beflammt.

Die Ergebnisse des Brenntest für die Prüfkörper mit den einzelnen Formulierungen sind in Tabelle 6 dargestellt.

**Tabelle 6**

| **Bezeichnung** | **Entzündungstest/ Brennbarkeitstest** |
|---|---|
| 1 | +/+ |
| 2 | +/+ |
| 3 | -/- (nur auf Alu beschichtet, kein Verbund geprüft) |
| 4 | -/- (nur auf Alu beschichtet, kein Verbund geprüft) |
| 5 | -/- (nur auf Alu beschichtet, kein Verbund geprüft) |
| 6 | -/- (nur auf Alu beschichtet, kein Verbund geprüft) |
| 7* | -/- |
| 8 | Wurde nicht geprüft, da nicht hitzebständig |
| 9 | Wurde nicht geprüft, da nicht hitzebständig |
| 10* | -/- |
| 11 | Wurde nicht geprüft, da nicht hitzebständig |
| 12 | Wurde nicht geprüft, da nicht hitzebständig |
| 13* | -/- |
| 14* | -/- |
| BM | +/+ |

| | |
|---|---|
| * erfindungsgemäss - entzündet nicht/brennt nicht + entzündet/flammt | |

Der Prüfkörper mit dem reinen Bindemittel (Formulierung 1) ist nicht brandbeständig. Die Prüfkörper mit dem erfindungsgemässen Klebstoff (Formulierung 7, 10 und 13) sind dagegen brandbeständig.

Gute Ergebnisse wurden auch mit einem Klebstoff erzielt, der vor der Trocknung und Aktivierung Lösungsmittel (5.75 % nass/nass) enthielt (Formulierung 14).

## Patentansprüche

1. Wasserbasierter Klebstoff umfassend ein dispergiertes Polymer und ein emulgiertes Silikonharzpolymer, **dadurch gekennzeichnet, dass** der Klebstoff über reaktive Gruppen bei 100 bis 300 °C nachvernetzbar ist, insbesondere über eine Kondensationsreaktion.

2. Klebstoff nach Anspruch 1, wobei der Klebstoff als Einkomponenten-System vorliegt.

3. Klebstoff nach Anspruch 1 oder 2, wobei das dispergierte Polymer ein thermoplastisches Polymer ist.

4. Klebstoff nach Anspruch 3, wobei das thermoplastische Polymer polare Gruppen aufweist und vorzugsweise ein Co-Polymer oder eine Kombination von Co-Polymeren ist, ausgewählt aus der Gruppe: Acrylat-Copolymer, Styrol-Acrylat-Copolymer, Ethylen-Vinylacetat-Copolymer, Acrylat-Urethan-Copolymer, Polyurethan-Copolymer, Ethylen-Acrylsäure-Copolymer.

5. Klebstoff nach einem der vorherigen Ansprüche, wobei das Silikonharzpolymer ein Polysiloxan mit organischen Seitengruppen ist, wobei die Seitengruppen vorzugsweise ausgewählt sind aus der Gruppe: Methyl-, Phenyl-, Hydroxy- und/oder Alkoxy-.

6. Klebstoff nach einem der vorherigen Ansprüche, wobei der Feststoffgehalt über 50 % Gewichtsprozent, vorzugsweise zwischen 60 % und 80 % beträgt.

7. Klebstoff nach einem der vorherigen Ansprüche, wobei der Klebstoff einen pH-Wert zwischen 6 und 9 aufweist.

8. Klebstoff nach einem der vorherigen Ansprüche, wobei der Klebstoff eine Viskosität von 1'000 bis 50'000 mPa·s aufweist.

9. Verfahren zum Verkleben von mindestens zwei unterschiedlichen Substraten mit einem Klebstoff nach einen der Ansprüche 1 bis 8, umfassend die Schritte:
- Bereitstellen von mindestens zwei Substraten,
- Auftragen des Klebstoffes auf zumindest einen Teil des ersten Substrats und/oder des zweiten Substrats,
- Fügen und Verkleben der beiden Substrate.

10. Verfahren nach Anspruch 9, wobei das Auftragen des Klebstoffes mittels Walze, Schablone, Rakel oder Sprühen erfolgt.

11. Verfahren nach Anspruch 9 oder 10, wobei ein Substrat ein Metall ist, vorzugsweise Aluminium; und das zweite Substrat ausgewählt ist aus der Gruppe: Glasfaser, Silikatfaser, Polyamidfaser, Polyacrylonitrilfaser und/oder Carbonfaser.

12. Verwendung eines Silikonharzpolymers in einem wasserbasierten Klebstoff, wobei der Klebstoff wenigstens ein in Wasser dispergiertes Polymer umfasst und über reaktive Gruppen bei 100 bis 300 °C nachvernetzbar ist, insbesondere über eine Kondensationsreaktion.

13. Isolationsmaterial, verklebt mit einem Klebstoff gemäss Anspruch 1.

14. Isolationsmaterial gemäss Anspruch 13, wobei das Material mindestens zwei verklebte Substrate aufweist, wobei ein erstes Substrat ein Metall ist, insbesondere Aluminium; und ein zweites Substrat ausgewählt ist aus der Gruppe: Glasfaser, Silikatfaser, Polyamidfaser, Polyacrylonitrilfaser und/oder Carbonfaser.

## Claims

1. Water-based adhesive comprising a dispersed polymer and an emulsified silicone resin polymer, **characterized in that** the adhesive is post-crosslinkable via reactive groups at 100 to 300 °C, in particular via a condensation reaction.

2. Adhesive according to claim 1, wherein the adhesive is present as a one-component system.

3. Adhesive according to claim 1 or 2, wherein the dispersed polymer is a thermoplastic polymer.

4. Adhesive according to claim 3, wherein the thermoplastic polymer has polar groups and is preferably a copolymer or a combination of copolymers, selected from the group: acrylate copolymer, styrene-acrylate copolymer, ethylene-vinyl acetate copolymer, acrylate-urethane copolymer, polyurethane copolymer, ethylene-acrylic acid copolymer.

5. Adhesive according to any one of the preceding claims, wherein the silicone resin polymer is a polysiloxane with organic side groups, wherein the side groups are preferably selected from the group: methyl, phenyl, hydroxy and/or alkoxy.

6. Adhesive according to any one of the preceding claims, wherein the solids content is over 50% by weight, preferably between 60% and 80%.

7. Adhesive according to any one of the preceding claims, wherein the adhesive has a pH value between 6 and 9.

8. Adhesive according to any one of the preceding claims, wherein the adhesive has a viscosity of 1,000 to 50,000 mPa.s.

9. Method for bonding at least two different substrates with an adhesive according to any one of claims 1 to 8, comprising the steps of:
- providing at least two substrates,
- applying the adhesive to at least a part of the first substrate and/or the second substrate,
- joining and bonding the two substrates.

10. Method according to claim 9, wherein the application of the adhesive is carried out by means of a roller, stencil, doctor blade or spraying.

11. Method according to claim 9 or 10, wherein one substrate is a metal, preferably aluminum; and the second substrate is selected from the group: glass fiber, silicate fiber, polyamide fiber, polyacrylonitrile fiber and/or carbon fiber.

12. Use of a silicone resin polymer in a water-based adhesive, wherein the adhesive comprises at least one polymer dispersed in water and is post-crosslinkable via reactive groups at 100 to 300 °C, in particular via a condensation reaction.

13. Insulation material, bonded with an adhesive according to claim 1.

14. Insulation material according to claim 13, wherein the material comprises at least two bonded substrates, wherein a first substrate is a metal, in particular aluminum; and a second substrate is selected from the group: glass fiber, silicate fiber, polyamide fiber, polyacrylonitrile fiber and/or carbon fiber.

## Revendications

1. Adhésif en phase aqueuse comprenant un polymère dispersé et un polymère de résine de silicone émulsifié, **caractérisé en ce que** l'adhésif est post-réticulable par des groupes réactifs entre 100 et 300 °C, notamment par une réaction de condensation.

2. Adhésif selon la revendication 1, l'adhésif se présentant sous la forme d'un système monocomposant.

3. Adhésif selon la revendication 1 ou 2, dans lequel le polymère dispersé est un polymère thermoplastique.

4. Adhésif selon la revendication 3, dans lequel le polymère thermoplastique présente des groupes polaires et est de préférence un copolymère ou une combinaison de copolymères, choisi dans le groupe: copolymère d'acrylate, copolymère de styrène-acrylate, copolymère d'éthylène-acétate de vinyle, copolymère d'acrylate-uréthane, copolymère de polyuréthane, copolymère d'éthylène-acide acrylique.

5. Adhésif selon l'une des revendications précédentes, dans lequel le polymère de résine de silicone est un polysiloxane avec des groupes latéraux organiques, les groupes latéraux étant de préférence choisis dans le groupe: méthyle, phényle, hydroxyle et/ou alcoxy.

6. Adhésif selon l'une des revendications précédentes, dans lequel la teneur en matières solides est supérieure à 50 % en poids, et se situe de préférence entre 60 % et 80 %.

7. Adhésif selon l'une des revendications précédentes, dans lequel l'adhésif présente une valeur de pH comprise entre 6 et 9.

8. Adhésif selon l'une des revendications précédentes, dans lequel l'adhésif présente une viscosité de 1'000 à 50'000 mPa.s.

9. Procédé pour le collage d'au moins deux substrats différents, avec un adhésif selon l'une des revendications 1 à 8, comprenant les étapes suivantes:
- Mise à disposition d'au moins deux substrats,
- Application de l'adhésif sur au moins une partie du premier substrat et/ou du second substrat,
- Assemblage et collage des deux substrats.

10. Procédé selon la revendication 9, dans lequel l'application de l'adhésif s'effectue au moyen d'un rouleau, d'un pochoir, d'une racle ou par pulvérisation.

11. Procédé selon la revendication 9 ou 10, dans lequel un substrat est un métal, de préférence l'aluminium; et le second substrat est choisi dans le groupe: fibre de verre, fibre de silicate, fibre de polyamide, fibre de polyacrylonitrile et/ou fibre de carbone.

12. Utilisation d'un polymère de résine de silicone dans un adhésif à base d'eau, l'adhésif comprenant au moins un polymère dispersé dans l'eau et étant post-réticulable par des groupes réactifs à 100 à 300 °C, notamment par une réaction de condensation.

13. Matériau d'isolation, collé avec un adhésif selon la revendication 1.

14. Matériau d'isolation selon la revendication 13, le matériau présentant au moins deux substrats collés, un premier substrat étant un métal, en particulier l'aluminium; et un second substrat étant choisi dans le groupe: fibre de verre, fibre de silicate, fibre de polyamide, fibre de polyacrylonitrile et/ou fibre de carbone.
